Europäisches Patentamt

European Patent Office

Office européen des brevets

(19)

(11) Veröffentlichungsnummer: **0 306 770 B1**

(12) # EUROPÄISCHE PATENTSCHRIFT

(45) Veröffentlichungstag der Patentschrift:
29.05.91 Patentblatt 91/22

(51) Int. Cl.$^5$: **F16L 33/22**

(21) Anmeldenummer: **88113733.5**

(22) Anmeldetag: **24.08.88**

(54) **Steckverbindung für Druckluftrohrleitungen aus Kunststoff.**

(30) Priorität: **10.09.87 DE 8712299 U**

(43) Veröffentlichungstag der Anmeldung:
**15.03.89 Patentblatt 89/11**

(45) Bekanntmachung des Hinweises auf die
Patenterteilung:
**29.05.91 Patentblatt 91/22**

(84) Benannte Vertragsstaaten:
**DE FR IT NL SE**

(56) Entgegenhaltungen:
**DE-A- 3 325 350**
**DE-U- 1 727 045**
**FR-A- 709 325**
**FR-A- 2 260 056**
**US-A- 3 062 564**

(73) Patentinhaber: **Armaturenfabrik Hermann
Voss GmbH & Co.
W-5272 Wipperfürth (DE)**

(72) Erfinder: **Rösch, Volker, Dr.
Elsenborner Weg 37
W-4330 Mülheim (DE)**
Erfinder: **Goller, Bernd
Attendorner Torstr. 2
W-5272 Wipperfürth (DE)**

(74) Vertreter: **Zapf, Christoph et al
Patentanwälte Dr. Solf und Zapf
Schlossbleiche 20
W-5600 Wuppertal 1 (DE)**

ist längsgeschlitzt und am Umfang dem Längsschlitz gegenüberliegend abgeflacht. Der Klemmring 17 besitzt eine äußere Umfangsfläche, die der konischen Umfangsfläche des Klemmabschnittes 9 angepaßt ist. Der Klemmring 17 weist in seiner Durchtrittsbohrung 18 zwei hintereinanderliegende, kreisringförmige Klemmkanten 19 auf. Diese Klemmkanten 19 weisen einen dreieckförmigen Querschnitt auf, wobei die gegen die Einsteckrichtung des Rohrleitungsendes 2 weisende Dreieckseite derart abgeschrägt ist, daß ein leichtes Einstecken des Rohrleitungsendes 2 möglich ist, wohingegen die gegenüberliegende Dreieckseite rechtwinklig zur Rohrleitungsachse verläuft. Mit diesem Klemmring 17 wird das Rohrleitungsende 2 innerhalb des Einschraubstutzens 1 fixiert, wenn Zug in Richtung des Pfeiles X ausgeübt wird oder aber wenn sich in der Rohrleitung ein Druck aufbaut, der einen Druck in Richtung des Pfeiles Y auf das Rohrleitungsende erzeugt. Hierbei wird der Klemmring gegen den konischen Klemmabschnitt 9 bewegt, wobei sich dann die Klemmkanten 19 gegen die Umfangsfläche des Rohrleitungsendes 2 drücken, so daß das Rohrleitungsende 2 zwischen dem Klemmring und der Stützhülse 3 eingeklemmt wird, so daß das Rohrleitungsende 2 innerhalb des Einschraubstutzens 1 fixiert wird.

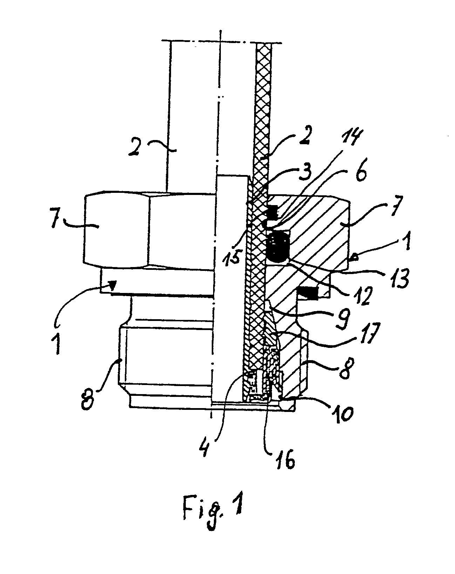

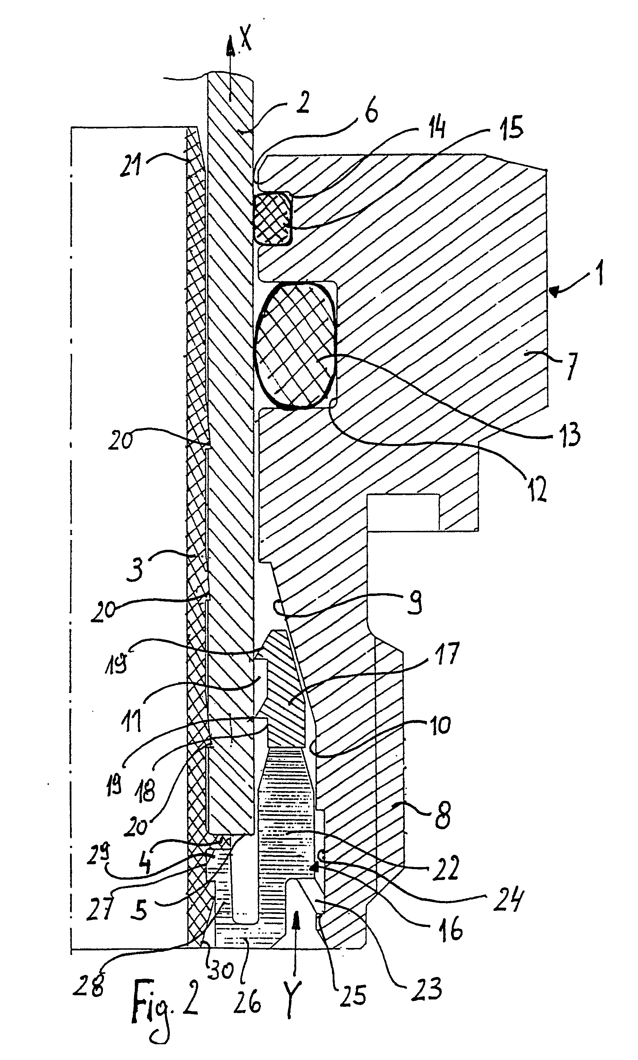

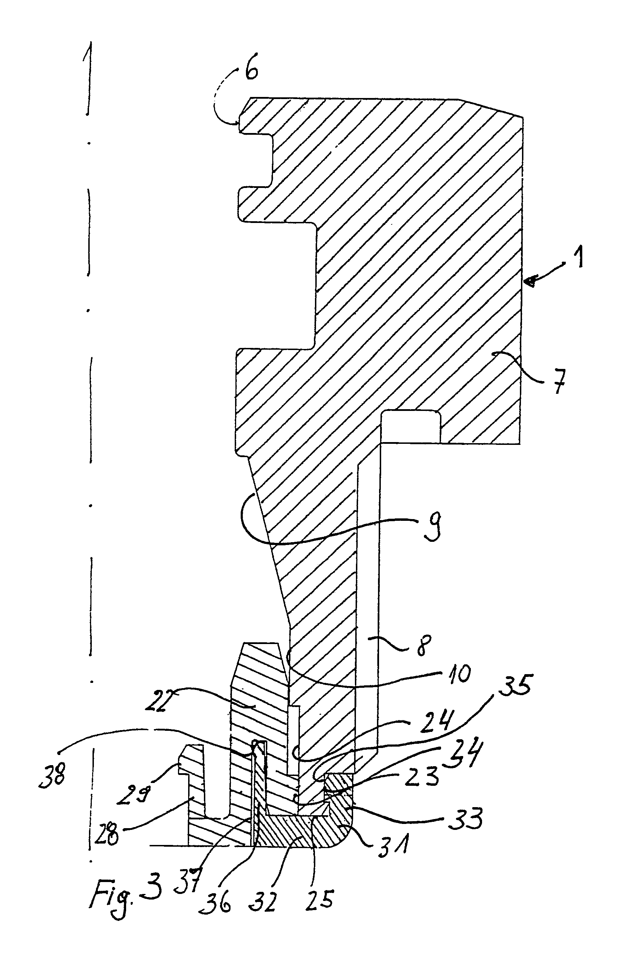

Gemäß der Erfindung ist nun vorgesehen, daß die Stützhülse 3 an ihrer Umfangsfläche derart ausgebildet ist, daß zwischen der Stützhülse 3 und dem Rohrleitungsende 2 im klemmenden Zustand des Rohrleitungsendes 2 aufgrund der radialen Klemmkraft des Klemmringes 17 eine formschlüssige Verbindung vorhanden ist. Dies wird dadurch erreicht, daß auf der Umfangsfläche der Stützhülse 3 radial beabstandete, ringförmige Ansätze 20 ausgebildet sind. Diese ringförmigen Ansätze 20 haben, im Querschnitt gesehen, ein Dreieckprofil, wobei die dem Einsteckende 21 der Stützhülse 3 zugekehrten Dreieckseiten der Ansätze 20 unter einem flachen, spitzen Winkel zur Längsachse des Rohrleitungsendes 2 verlaufen und die am Einsteckende der Stützhülse 3 abgewandten Dreieckseiten rechtwinklig zur Rohrleitungsachse ausgerichtet sind. Hierdurch wird ein Dornprofil bekannter Art geschaffen, wobei dieses Dornprofil jedoch derart ausgebildet ist, daß durch das Einschieben der Stützhülse 3 eine maximale Aufweitung der Rohrleitung von 5% erreicht wird. Wie insbesondere aus Fig. 2 ersichtlich ist, ist der Abstand der ringförmigen Ansätze 20 zueinander und die Anordnung dieser Ansätze auf der Stützhülse 3 derart gewählt, daß im Klemmzustand des Rohrleitungsendes 2 die Klemmkanten 19 des Klemmringes 17 zwischen zwei ringförmigen Ansätzen 20 der Stützhülse 3 liegen, so daß hierdurch das Material der Rohrleitung in die zwischen den beiden ringförmigen Ansätzen 20 vorhandene, umlaufende Vertiefung der Stützhülse 3 hineingedrückt wird, wodurch die formschlüssige Verbindung zwischen dem Rohrleitungsende 2 und der Stützhülse 3 erreicht wird. Durch diese formschlüssige Verbindung wird erreicht, daß auch bei großen Temperaturschwankungen, beispielsweise im Bereich von –40°C bis 125°C, die dabei auftretenden Schrumpf- bzw. Ausdehnungsbewegungen im Rohrleitungsmaterial nicht zu einer Undichtigkeit führen können, da eine einwandfreie Verbindung zwischen Stützhülse und Rohrleitung gegeben ist, wodurch die vom Klemmring aufgebrachte Klemmkraft voll wirksam bleibt. Dies ist insbesondere bei Rohrleitungen in einem Bereich mit einem Durchmesser von größer als 6 mm wesentlich, insbesondere bei Rohren bis 12-14 mm Außendurchmesser.

Der erfindungsgemäß vorgesehene Anlagekörper 16 ist im eingesteckten Zustand des Rohrleitungsendes mit der Stützhülse 3 formschlüssig verbunden und ist im Einschraubstutzen 1 verschiebbar gegen einen Endanschlag geführt. Hierzu besteht der Anlagekörper 16 aus einem ringförmigen Mittelteil 22, an dem eine außen umlaufende Anschlaglippe 23 angeformt ist. Diese Anschlaglippe ragt mit ihrem freien Ende in eine im zylindrischen Bohrungsabschnitt 10 verlaufende Ringnut 24 hinein, wobei die Endfläche 25 der Ringnut jeweils als Anschlag für die Anschlaglippe 23 dient. Hierdurch wird einerseits eine Verschiebbarkeit des Anlagekörpers 16 ermöglicht und andererseits aber verhindert, daß der Anschlagkörper 16 aus dem Einschraubstutzen 1 herausgedrückt werden kann beim Einstecken des Rohrleitungsendes 2. Weiterhin ist am ringförmigen Mittelteil 22 ein radialer, nach innen weisender Ansatz 26 vorgesehen, von dem aus ein in axialer Richtung auf eine hinter dem ringförmigen Anschlag 4 ausgebildete, umlaufende Nut 27 in der Stützhülse 3 zu verlaufender Rastkragen 28 ausgebildet ist, der mit einem Ansatz 29 in die Nut 27 einrastet. Somit sitzt der Anlagekörper 16 unlösbar innerhalb des Einschraubstutzens 1, da im eingesteckten Zustand des Rohrleitungsendes 2 eine formschlüssige Verbindung zwischen Anlagekörper 16 und Stützhülse 3 gegeben ist. Die axiale Länge des ringförmigen Mittelteils 22 ist derart bemessen, daß bei auftretendem Druck in Richtung des Pfeils Y der Anlagekörper 16 gegen den Klemmring 17 gedrückt wird, so daß der Klemmring gegen die Umfangsfläche des Klemmabschnitts 9 derart gepreßt wird, daß durch die Klemmkanten 19 eine radiale Kraft erzeugt wird, die derart bemessen ist, daß hierdurch eine derartige Verformung der Wandung des Rohrleitungsendes 2 erreicht wird, daß eine formschlüssige Verbindung gegeben ist.

Die Montage der erfindungsgemäßen Steckverbindung ist folgendermaßen. Zunächst wird in das Rohrleitungsende 2 die Stützhülse 3 eingeschoben, bis die Stützhülse 3 mit ihrem ringförmigen Anschlag 4 am Rohrleitungsende anliegt. Das Einschieben der Stützhülse 3 erfolgt dabei mit geringer Einschubkraft aufgrund des relativ flach ausgebildeten, erfindungs-

6. Steckverbindung nach Anspruch 5, **dadurch gekennzeichnet**, daß von einem radialen, nach innen weisenden Ansatz (26) des ringförmigen Mittelteils (22) in axialer Richtung auf die Nut (27) zu verlaufend ein Rastkragen (28) ausgebildet ist, der mit einem Ansatz (29) in der Nut (27) rastend sitzt.

7. Steckverbindung nach Anspruch 5 oder 6, **dadurch gekennzeichnet**, daß die als Endanschlag dienende Endfläche (25) der Ringnut (24) von einem auf den Einschraubstutzen (1) aufsteckbaren, ringförmigen Begrenzungskörper (31) gebildet wird.

8. Steckverbindung nach Anspruch 7, **dadurch gekennzeichnet**, daß der Begrenzungskörper an seinem mittleren Ringteil (32) am inneren Umfang einen in Richtung auf den Anlagekörper (16) ragenden Kragen (36) für diesen aufweist, der in eine entsprechende Ausnehmung (37) des Anlagekörpers (16) hineinragt.

**Claims**

1. Insertion-type connection for pipelines, in particular compressed air lines made of plastics, comprising a screw-in connection piece (1) with an external thread for receiving a pipeline end (2) insertable from one side and comprising a clamping ring (17) which holds the pipeline end (2) in the inserted state and whereof the through-bore (18) has clamp edges (19), and comprising a supporting sleeve (3) which is held in the interior of the pipeline end (2) and which has an annular stop (4) for the pipeline end (2) and an abutment body (16), held behind the annular stop (4), for the clamping ring (17), which is guided displaceably within the screw-in connection piece (1), characterized in that the supporting sleeve (3) has on the periphery at least two axially spaced annular luge (20), so that in the clamped state of the pipeline end (2) the action of radial force of the clamping ring (17) produces a form-fit connection between the supporting sleeve (3) and the pipeline end (2), the displacement part of the abutment body (16) and its extent in the direction of the longitudinal axis of the insertion-type connection being dimensioned such that in the clamping screws of the pipeline end (2) the clamp edges (19) made in the through-bore (18) of the clamping ring (17) lie between two annular lugs (20) of the supporting sleeve (3).

2. Insertion-ype connection according to Claim 1, characterized in that the lugs (20) have a triangular cross-section and the triangle side facing the insertion end extends at an obtuse angle obliquely with respect to the longitudinal axis of the pipeline, increasing in the direction of the annular stop (4), and the other triangle side preferably extends perpendicular to the longitudinal axis of the pipeline, so that the supporting sleeves (3) have the peripheral profile of a thorn.

3. Insertion-type connection according to Claim 1 or 2, characterized in that the abutment body (16) is held in latching manner within an annular groove (27) of the supporting sleeve (3).

4. Insertion-type connection according to Claim 3, characterized in that the displaccement path of the abutment body (16) within the screw-in connection piece is limited by at least one limit stop (25) at the screw-in end of the screw-in connection piece (1).

5. Insertion-type connection piece according to one of Claims 1 to 4, characterized in that the abutment body (16) comprises an annular middle part (22) which surrounds the pipeline end and on which there is externally constructed a stop lip (23) which is guided in an annular groove (24) in the interior of the screw-in connection piece (1), this annular groove having an end face (25) serving as a limit stop.

6. Insertion-type connection according to Claim 5, characterized in that, from a radial, inwardly pointing lug (26) of the annular middle part (22), a latching collar (28) is constructed, extending towards the groove (27) in the axial direction and seated in latching manner in the groove (27) by means of a lug (29).

7. Insertion-type connection according to Claims 5 or 6, characterized in that the end face (25), serving as a limit stop, of the annular groove (24) is formed by an annular limiting body (31) which may be pushed onto the screw-in connection piece (1).

8. Insertion-type connection according to Claim 7, characterized in that the limiting body has on its central annular part (32) on the inner periphery a collar (36) for the abutment body (16) pointing in the direction thereof, and projecting into a corresponding recess (37) of the abutment body (16).

**Revendications**

1. Liaison par emboîtement pour tuyaux, en particulier pour des conduits d'air comprimé réalisés en matière synthétique, comprenant un manchon vissé (1) à filet extérieur pouvant accueillir une extrémité (2) de tuyau emboîtable d'un côté et une bague de serrage (17) maintenant l'extrémité (2) du tuyau emboîté, l'alésage traversant (13) de ce collier présentant des bords de serrage (19), ainsi qu'une douille de support (3), placée à l'intérieur de l'extrémité (2) et munie d'une butée annulaire (4) pour l'extrémité (2) et d'un corps (16) placé en aval de la butée annulaire (4), contre lequel s'appuie la bague de serrage (17) et qui peut se déplacer à l'intérieur du manchon (1),
caractérisé par le fait que la douille de support (3) possède sur sa circonférence au moins deux prolongements annulaires (20) séparés par une certaine distance axiale, assurant, à l'état serré de l'extrémité (2) du tuyau, une liaison mécanique sans jeu entre la douille de support (3) et l'extrémité (2) du tuyau, grâce à l'effort radial de la bague de serrage (17), le trajet

Fig. 1

Fig. 2

Fig. 3